# EUROPEAN PATENT APPLICATION

(11) **EP 4 715 193 A1**
(43) Date of publication of application: **25.03.2026**
(21) Application number: 24885817.7
(22) Date of filing: 31.10.2024
(51) Int. Cl.: F02M 26/28

(54) **LEANING VEHICLE**

(30) Priority: 31.10.2023 WO PCT/JP2023/039342; 31.10.2023 WO PCT/JP2023/039345
(71) Applicant: Yamaha Hatsudoki Kabushiki Kaisha, Iwata-shi, Shizuoka 438-8501 (JP)
(72) Inventor: MAKITA, Naoki, Iwata-shi, Shizuoka 438-8501 (JP); TAKAHASHI, Toshihiko, Iwata-shi, Shizuoka 438-8501 (JP); TORIGOSHI, Masaki, Iwata-shi, Shizuoka 438-8501 (JP); TAJIMA, Naoto, Iwata-shi, Shizuoka 438-8501 (JP); OKUBO, Akihiko, Iwata-shi, Shizuoka 438-8501 (JP); KAWABE, Keiji, Iwata-shi, Shizuoka 438-8501 (JP)
(74) Representative: Zimmermann, Tankred Klaus
(86) International application number: PCT/JP2024/038861
(87) International publication number: WO 2025/095050

(57) **Abstract**

A leaning vehicle 1 includes: a vehicle body 2 which leans in a vehicle leftward direction when turning left and leans in a vehicle rightward direction when turning right; and an EGR cooler 51 which is mounted on the vehicle body 2, which is provided at an intermediate part of an EGR path 50 in which part of exhaust gas generated in an engine unit 3 recirculates from an exhaust path 30 to an intake path 20, which has an exhaust-side port 52a through which the exhaust gas flows in from the exhaust path 30 and an intake-side port 52b through which the exhaust gas flows out toward the intake path 20, and which is configured to cool exhaust gas, and when the leaning vehicle 1 turns as the vehicle body 2 leans in the vehicle left-right direction, the condensed water in the EGR cooler 51 being allowed to be discharged from the exhaust-side port 52a of the EGR cooler 51 and flow toward the exhaust path 30 due to a resultant force S of gravity G and a centrifugal force C, in a vehicle body left-right direction, the exhaust-side port 52a and the intake-side port 52b of the EGR cooler 51 are spaced apart from each other, and in the vehicle body up-down direction, the lower end of the exhaust-side port 52a is positioned below the intake-side port 52b.

## Description

### [Technical Field]

The present teaching relates to a leaning vehicle having an EGR cooler.

### [Background Art]

Conventionally, on an EGR (Exhaust Gas Recirculation) path by which part of exhaust gas generated in an engine unit is recirculated from an exhaust path to an intake path, an EGR cooler may be provided to cool the exhaust gas. For example, Patent Literature 1 recites a motorcycle in which an EGR cooler is integrally formed in a gearbox housing. In the EGR cooler of Patent Literature 1, an exhaust-side port into which exhaust gas flows is positioned below an intake-side port through which the exhaust gas flows out. Due to this, when the exhaust gas is cooled by the EGR cooler, condensed water generated in the EGR cooler is assumed to be discharged from the exhaust-side port and flow toward the exhaust path.

### [Citation List]

### [Patent Literatures]

[Patent Literature 1] German Unexamined Patent Publication No. 102018120800

### [Summary]

### [Technical Problem]

For leaning vehicles such as motorcycles, there has been a need for a specific arrangement for causing condensed water generated in an EGR cooler to flow toward an exhaust path, which take into account features peculiar to leaning vehicles and is different from Patent Literature 1.

In addition to this, leaning vehicles may have peculiar features different from those of automobiles, such as the following features (A) to (F).
(A) A vehicle body leans in a vehicle leftward direction when turning left and leans in a vehicle rightward direction when turning right.
(B) A vehicle width (length in the vehicle body left-right direction) is short.
(C) At least one of a tank, a dummy tank, a seat, or a storage box is positioned at the center of the vehicle body in the vehicle body left-right direction.
(D) The leaning vehicle stands in a state of leaning in the vehicle left-right direction with the help of a side stand.
(E) The leaning vehicle includes two frame portions which extend along a vehicle front-rear direction and the interval between these portions is short in the vehicle body left-right direction because of the short vehicle width.
(F) The leaning vehicle includes two cover portions which extend along the vehicle front-rear direction and the interval between these portions is short in the vehicle body left-right direction because of the short vehicle width.

An object of the present teaching is to provide a leaning vehicle which is capable of allowing condensed water generated in an EGR cooler to flow toward an exhaust path by means of an arrangement that is different from Patent Literature 1 and takes into account an influence on the EGR cooler of features peculiar to the leaning vehicle, such as (A) a vehicle body leans during turning, (B) a vehicle width is short, (C) at least one of a tank, a dummy tank, a seat, or a storage box is positioned at the center of the vehicle body in a vehicle body left-right direction, (D) the leaning vehicle stands in a state of leaning in a vehicle left-right direction with the help of a side stand, (E) the leaning vehicle includes two frame portions which extend along a vehicle front-rear direction and the interval between these portions is short in the vehicle body left-right direction, and (F) the leaning vehicle includes two cover portions which extend along the vehicle front-rear direction and the interval between these portions is short in the vehicle body left-right direction.

### [Solution to Problem]

(1) A leaning vehicle of an embodiment of the present teaching includes:
   a vehicle body which leans in a vehicle leftward direction when turning left and leans in a vehicle rightward direction when turning right; and
   an EGR cooler (i) which is mounted on the vehicle body, (ii) which is provided at an intermediate part of an EGR path in which part of exhaust gas generated in an engine unit recirculates from an exhaust path to an intake path, (iii) which has an exhaust-side port through which the exhaust gas flows in from the exhaust path and an intake-side port through which the exhaust gas flows out toward the intake path, (iv) which is arranged such that, when the leaning vehicle is in an upright state, the lower end of the exhaust-side port is positioned below the intake-side port in a vehicle up-down direction, (v) which is arranged such that, even when the vehicle body leans in a vehicle left-right direction, positional relation between the exhaust-side port and the intake-side port in a vehicle body up-down direction that is set with reference to the vehicle body leaning in the vehicle left-right direction is maintained, (vi) which is configured to cool the exhaust gas, and (vii) which is provided to allow condensed water generated due to cooling of the exhaust gas to be discharged from the exhaust-side port and flow toward the exhaust path,
   when the leaning vehicle turns as the vehicle body leans in the vehicle left-right direction, the condensed water in the EGR cooler being allowed to be discharged from the exhaust-side port and flow toward the exhaust path due to a resultant force of gravity and a centrifugal force,
   in a vehicle body left-right direction that is set with reference to the vehicle body leaning in the vehicle left-right direction, the exhaust-side port and the intake-side port of the EGR cooler being spaced apart from each other, and in the vehicle body up-down direction, the lower end of the exhaust-side port being positioned below the intake-side port.

According to this configuration, the exhaust-side port and the intake-side port of the EGR cooler are distanced from each other in the vehicle body left-right direction and the lower end of the exhaust-side port is provided below the intake-side port in the vehicle body up-down direction so that, when the leaning vehicle turns as the vehicle body leans in the vehicle left-right direction, the condensed water in the EGR cooler is discharged from the exhaust-side port and flows toward the exhaust path due to the resultant force of the gravity and the centrifugal force. With this arrangement, when the leaning vehicle turns as the vehicle body leans in the vehicle left-right direction, the resultant force of the centrifugal force and the gravity acts on the condensed water in the EGR cooler. The orientation of this resultant force is downward in the vehicle body up-down direction, irrespective of the inclination angle of the vehicle body. It is therefore possible to allow the condensed water generated in the EGR cooler to flow toward the exhaust path, by utilizing the resultant force.

To put it differently, according to the configuration above, it is possible to allow the condensed water generated in the EGR cooler to flow toward the exhaust path in consideration of an influence on the EGR cooler of a feature peculiar to the leaning vehicle, which is an action of the above-described downward resultant force in the vehicle body up-down direction irrespective of the inclination angle of the vehicle body onto the condensed water in the EGR cooler when the vehicle turns and the vehicle body leans.

It is therefore possible to allow the condensed water generated in the EGR cooler to flow toward the exhaust path, by the configuration different from Patent Literature 1.

(2) In addition to the arrangement (1) above, the leaning vehicle of the embodiment of the present teaching may include:
a side stand with the help of which the leaning vehicle stands while the vehicle body leans in the vehicle left-right direction,
when the leaning vehicle stands with the help of the side stand while the vehicle body leans in the vehicle left-right direction, the condensed water in the EGR cooler being allowed to flow toward the exhaust path,
in the vehicle body up-down direction, the lower end of the exhaust-side port being positioned below the intake-side port.

According to this configuration, when the leaning vehicle stands with the help of the side stand while the vehicle body leans in the vehicle left-right direction, it is possible to allow the condensed water in the EGR cooler to flow toward the exhaust path by the gravity. To put it differently, it is possible to allow the condensed water generated in the EGR cooler to flow toward the exhaust path, in consideration of an influence on the EGR cooler of a feature peculiar to the leaning vehicle, which is standing of the leaning vehicle with the help of the side stand while the vehicle body is leaning, and by the configuration different from Patent Literature 1.

(3) In addition to the arrangement (2) above, the leaning vehicle of the embodiment of the present teaching may be arranged such that
the side stand is positioned to the left of the vehicle body in the vehicle body left-right direction and the exhaust-side port is positioned leftward of the intake-side port in the vehicle body left-right direction, or
the side stand is positioned to the right of the vehicle body in the vehicle body left-right direction and the exhaust-side port is positioned rightward of the intake-side port in the vehicle body left-right direction.

According to this configuration, when the leaning vehicle stands with the help of the side stand while the vehicle body leans in the vehicle left-right direction, it is possible to establish the state in which the lower end of the exhaust-side port of the EGR cooler is positioned below the intake-side port, by utilizing the inclination of the vehicle body achieved with the help of the side stand. To put it differently, it is possible to allow the condensed water generated in the EGR cooler to flow toward the exhaust path by utilizing the feature peculiar to the leaning vehicle, which is standing of the leaning vehicle with the help of the side stand while the vehicle body is leaning.

(4) In addition to any one of the arrangements (1) to (3) above, the leaning vehicle of the embodiment of the present teaching may be arranged as described below.

In the vehicle body left-right direction, at least part of the EGR cooler is positioned between the left end and the right end of the vehicle body and the center of the EGR cooler is positioned leftward or rightward of the center of the vehicle body.

According to this configuration, because the leaning vehicle is short in vehicle width (length in the vehicle body left-right direction), in the vehicle body left-right direction, at least part of the EGR cooler is positioned between the left end and the right end of the vehicle body and the center of the EGR cooler is positioned leftward or rightward of the center of the vehicle body, and hence, part of the EGR cooler can be easily provided at a position protruding from the left end or the right end of the vehicle body or a position close to the left end or the right end of the vehicle body. As a result of this, heat moving up from the EGR cooler is less likely to be trapped, for example, in the space below the tank, the dummy tank, the seat, or the storage box at the center of the vehicle body in the vehicle body left-right direction, the space between the two frame portions or the two cover portions which extend along the vehicle front-rear direction and the interval between these portions is short in the vehicle body left-right direction because of the short vehicle width. Because the heat is less likely to be trapped in these spaces, the cooling capability of the EGR cooler can be improved. To put it differently, it is possible to allow the condensed water generated in the EGR cooler to flow toward the exhaust path (i) in consideration of the feature peculiar to the leaning vehicle, which is short vehicle width, (ii) in consideration of an influence on the EGR cooler of the feature peculiar to the leaning vehicle, which is the placement of at least one of the tank, the dummy tank, the seat, or the storage box at the center of the vehicle body in the vehicle body left-right direction and/or the inclusion of the two frame portions or the two cover portions which extend along the vehicle front-rear direction and the interval between these portions is short in the vehicle body left-right direction because of the short vehicle width, and (iii) by the configuration different from Patent Literature 1.

(5) In addition to the arrangement (4) above, the leaning vehicle of the embodiment of the present teaching may be arranged such that,
in the vehicle body left-right direction, the center of the EGR cooler is positioned between the left end and the right end of the vehicle body.

According to this configuration, the protrusion amount of the EGR cooler in the vehicle body left-right direction is suppressed as compared to a case where, in the vehicle body left-right direction, at least part of the EGR cooler is positioned between the left end and the right end of the vehicle body and the center of the EGR cooler is positioned leftward of the left end of the vehicle body or rightward of the right end of the vehicle body.

(6) In addition to the arrangement (4) or (5) above, the leaning vehicle of the embodiment of the present teaching may further include:
at least one of a tank, a dummy tank, a seat, or a storage box,
in the vehicle body up-down direction, at least part of the EGR cooler being positioned directly below at least one of the tank, the dummy tank, the seat, or the storage box.

According to this configuration, in comparison with a case where the center of the EGR cooler is at the center of the vehicle body in the vehicle body left-right direction, heat moving up from the EGR cooler is less likely to be trapped in the space directly below the tank, the dummy tank, the seat, or the storage box. To put it differently, it is possible to allow the condensed water generated in the EGR cooler to flow toward the exhaust path (i) in consideration of an influence on the EGR cooler of the features peculiar to the leaning vehicle, which are short vehicle width and the placement of at least one of the tank, the dummy tank, the seat, or the storage box at the center of the vehicle body in the vehicle body left-right direction and (ii) by the configuration different from Patent Literature 1.

(7) In addition to any one of the arrangements (4) to (6) above, the leaning vehicle of the embodiment of the present teaching may further include
two frame portions which are provided at a left portion and a right portion of the vehicle body in the vehicle body left-right direction and extend along the vehicle front-rear direction,
in the vehicle body up-down direction, at least part of the EGR cooler being positioned directly below a space between the two frame portions.

Typically, a leaning vehicle that is short in vehicle width has two frame portions which extend along the vehicle front-rear direction and the interval between these portions is short in the vehicle body left-right direction, and heat tends to be trapped in a space between the two frame portions. According to the configuration above, in comparison with a case where the center of the EGR cooler is at the center of the vehicle body in the vehicle body left-right direction, heat moving up from the EGR cooler is less likely to be trapped in the space between the two frame portions which extend along the vehicle front-rear direction and the interval between these portions is short in the vehicle body left-right direction. To put it differently, it is possible to allow the condensed water generated in the EGR cooler to flow toward the exhaust path (i) in consideration of an influence on the EGR cooler of the feature peculiar to the leaning vehicle, which is a likelihood of entrapment of heat in the space between the two frame portions which extend along the vehicle front-rear direction and the interval between these portions is short in the vehicle body left-right direction because of the short vehicle width and (ii) by the configuration different from Patent Literature 1.

(8) In addition to any one of the arrangements (4) to (7) above, the leaning vehicle of the embodiment of the present teaching may further include
two cover portions which are provided at a left portion and a right portion of the vehicle body in the vehicle body left-right direction and extend along the vehicle front-rear direction,
in the vehicle body up-down direction, at least part of the EGR cooler being positioned directly below a space between the two cover portions.

Typically, a leaning vehicle that is short in vehicle width has two cover portions which extend along the vehicle front-rear direction and the interval between these portions is short in the vehicle body left-right direction, and heat tends to be trapped in a space between the two cover portions. According to the configuration above, in comparison with a case where the center of the EGR cooler is at the center of the vehicle body in the vehicle body left-right direction, heat moving up from the EGR cooler is less likely to be trapped in the space between the two cover portions which extend along the vehicle front-rear direction and the interval between these portions is short in the vehicle body left-right direction. To put it differently, it is possible to allow the condensed water generated in the EGR cooler to flow toward the exhaust path (i) in consideration of an influence on the EGR cooler of the feature peculiar to the leaning vehicle, which is a likelihood of entrapment of heat in the space between the two cover portions which extend along the vehicle front-rear direction and the interval between these portions is short in the vehicle body left-right direction because of the short vehicle width and (ii) by the configuration different from Patent Literature 1.

In the present teaching and embodiments, a path indicates a space in which an object such as gas flows. This definition is applicable to an EGR path, an intake path, and an exhaust path of the present teaching and embodiments.

In the present teaching and embodiments, a vehicle up-down direction is a direction perpendicular to a horizontal plane when the leaning vehicle stands erect on the horizontal plane.

In the present teaching and embodiments, a vehicle front-rear direction is a direction parallel to a running direction of the leaning vehicle when the leaning vehicle runs straight.

In the present teaching and embodiments, a vehicle leftward direction is a direction orthogonal to the vehicle up-down direction and the vehicle front-rear direction, and is a leftward direction for the rider riding on the leaning vehicle. The same applies to a vehicle rightward direction. A vehicle left-right direction indicates either the vehicle leftward direction or the vehicle rightward direction.

In the present teaching and embodiments, the leaning vehicle may be, for example, a motorcycle or a motor tricycle having one front wheel or two front wheels. In the present teaching and embodiments, a driving source of the leaning vehicle may only be an engine, or may be both an engine and an electric motor. The electric motor as the driving source does not include a starter motor which is used exclusively for starting an engine.

In the present teaching and embodiments, a vehicle body includes at least a vehicle body frame, a handle, a seat, and a suspension. When the leaning vehicle includes a front wheel and a rear wheel, the vehicle body includes the front wheel and the rear wheel.

In the present teaching and embodiments, a phrase "the vehicle body leans in the vehicle leftward direction" indicates that the vehicle body leans in the vehicle leftward direction relative to the vehicle up-down direction. To put it differently, the vehicle body leans such that an upper part of the vehicle body is leftward of a lower part in the vehicle left-right direction. The same applies to leaning of the vehicle body in the vehicle rightward direction.

In the present teaching and embodiments, a vehicle body up-down direction indicates an up-down direction relative to the vehicle body. The vehicle body up-down direction is therefore a direction fixed relative to the vehicle body. When the leaning vehicle stands erect relative to a horizontal plane, the vehicle body up-down direction is identical with the vehicle up-down direction. When the leaning vehicle leans in the vehicle left-right direction, the vehicle body up-down direction is tilted by the inclination angle of the leaning vehicle relative to the vehicle up-down direction. In the present teaching and embodiments, a vehicle body left-right direction is orthogonal to the vehicle body up-down direction and the vehicle front-rear direction. The vehicle body left-right direction is therefore a direction fixed relative to the vehicle body. When the leaning vehicle stands erect on the horizontal plane, the vehicle body left-right direction is identical with the vehicle left-right direction. When the leaning vehicle leans in the vehicle left-right direction, the vehicle body left-right direction is tilted by the inclination angle of the leaning vehicle relative to the vehicle left-right direction.

In the present teaching and embodiments, the leaning vehicle includes a vehicle body and an engine unit. In the present teaching and embodiments, the engine unit includes at least an engine, an EGR cooler, an intake pipe used for introducing air into the engine, and an exhaust pipe through which exhaust gas is discharged from the engine. In the present teaching and embodiments, the engine may be a four-stroke engine. The engine may be a multi-cylinder engine having plural combustion chambers. The engine may be a parallel multi-cylinder engine having combustion chambers aligned in the vehicle body left-right direction. The engine may be a V engine that has a V shape when viewed in the vehicle body left-right direction. The engine may be a single-cylinder engine having one combustion chamber.

In the present teaching and embodiments, the engine unit includes an intake path and an exhaust path.

In the present teaching and embodiments, the intake path is directly connected to at least one combustion chamber of the engine. In the intake path, air supplied to the at least one combustion chamber flows. The intake path is partially formed inside the engine. A rear part of the engine may constitute part of the intake path. The intake path is partially formed outside the engine and constituted by the above-described intake pipe, etc. The intake path has at least one downstream end in the flow direction of the air. The number of the at least one downstream end of the intake path may be identical with the number of combustion chambers or larger than the number of combustion chambers. One downstream end or two downstream ends of the intake path may be provided for one combustion chamber. When the number of the downstream ends of the intake path is plural, a part of the intake path including plural downstream ends may have a branched shape to branch the airflow.

In the present teaching and embodiments, the exhaust path is directly connected to at least one combustion chamber of the engine. In the exhaust path, exhaust gas exhausted from the at least one combustion chamber flows. The exhaust path is partially formed inside the engine. A front portion of the engine may constitute part of the exhaust path. The exhaust path is partially formed outside the engine and constituted by the above-described exhaust pipe, etc. The exhaust path has at least one upstream end in the flow direction of the exhaust gas. The number of the at least one upstream end of the exhaust path may be identical with the number of combustion chambers or larger than the number of combustion chambers. One upstream end or two upstream ends of the exhaust path may be provided for one combustion chamber. When the number of the upstream ends of the exhaust path is plural, a part of the exhaust path including plural upstream ends may be formed to gather the exhaust gas flowing from the plural upstream ends.

In the present teaching and embodiments, an EGR path is directly connected to the intake path and the exhaust path. The EGR path may be connected to the exhaust path and the intake path at the outside of the engine. The EGR path may be connected to the exhaust path and the intake path at the inside of the engine. The EGR path may be connected to the exhaust path at the inside of the engine and connected to the intake path at the outside of the engine. The EGR path may be connected to the exhaust path at the outside of the engine and connected to the intake path at the inside of the engine.

In the present teaching and embodiments, the number of junctions between the EGR path and the exhaust path may be one or plural. When the engine has plural combustion chambers, the EGR path may be connected to the exhaust path such that part of the exhaust gas exhausted from the plural combustion chambers flows into the EGR path. When the engine has plural combustion chambers, the EGR path may be connected to the exhaust path such that only part of the exhaust gas exhausted from at least one of the plural combustion chambers flows into the EGR path.

In the present teaching and embodiments, the number of junctions between the EGR path and the intake path may be one or plural.

In the present teaching and embodiments, the EGR path may be provided with an EGR valve configured to adjust the flow rate of the exhaust gas flowing in the EGR path. The EGR valve may be provided between the intake path and the EGR cooler on the EGR path.

In the present teaching and embodiments, the EGR cooler is configured to cool the exhaust gas flowing into the EGR cooler through the exhaust-side port. The EGR cooler may be configured to cool the exhaust gas by utilizing coolant (e.g., water) for cooling the engine. In this case, the engine may include a coolant passage dedicated for the EGR cooler. The EGR cooler may be configured to cool the exhaust gas by utilizing an air flow generated by the running of the leaning vehicle, irrespective of the cooling method of cooling the engine. In this case, the EGR cooler includes a fin by which the heat exchange efficiency is improved by increasing the contact area with an air flow.

In the present teaching and embodiments, an expression "the EGR cooler is provided at an intermediate part of the EGR path" indicates that a part of the EGR cooler, which actually cools exhaust gas, is not provided at a junction between the exhaust path or the intake path and the EGR path. The part of the EGR cooler, which actually cools exhaust gas, may be, for example, a part of the EGR cooler which includes a coolant passage.

In the present teaching and embodiments, the EGR cooler may be independent from the engine. In this case, the EGR cooler may be supported by the engine.

In the present teaching and embodiments, an expression "the EGR cooler is provided to allow condensed water generated due to cooling of exhaust gas to be discharged from the exhaust-side port and flow toward the exhaust path" indicates that the EGR cooler and the EGR path are arranged such that condensed water in the EGR cooler, which is generated due to cooling of exhaust gas by the EGR cooler, flows toward the exhaust-side port of the EGR cooler and is discharged from the exhaust-side port, and the condensed water discharged from the exhaust-side port flows in the EGR path toward the exhaust path.

In the present teaching and embodiments, an expression "condensed water generated due to cooling of exhaust gas is discharged from the exhaust-side port and flows toward the exhaust path" encompasses a case where condensed water in the EGR cooler, which is generated due to cooling of exhaust gas by the EGR cooler, is discharged from the exhaust-side port and flows into the exhaust path. The condensed water discharged from the exhaust-side port may evaporate before reaching the exhaust path.

In the present teaching and embodiments, an expression "when the leaning vehicle turns as the vehicle body leans in the vehicle left-right direction, condensed water in the EGR cooler is discharged from the exhaust-side port and flows toward the exhaust path due to a resultant force of the gravity and the centrifugal force" indicates that, in a state in which forces acting on the leaning vehicle are balanced to allow the leaning vehicle to perform constant turning, condensed water in the EGR cooler flows toward the exhaust-side port of the EGR cooler and discharged from the exhaust-side port due to a resultant force of the gravity and the centrifugal force, and the condensed water discharged from the exhaust-side port flows in the EGR path toward the exhaust path due to the resultant force of the gravity and the centrifugal force. The resultant force is a downward force in the vehicle body up-down direction, irrespective of the inclination angle of the vehicle body.

In the present teaching and embodiments, the expression "when the leaning vehicle turns as the vehicle body leans in the vehicle left-right direction, condensed water in the EGR cooler is discharged from the exhaust-side port and flows toward the exhaust path due to a resultant force of the gravity and the centrifugal force" encompasses a case where, in a state in which forces acting on the leaning vehicle are balanced to allow the leaning vehicle to perform constant turning, condensed water in the EGR cooler is discharged from the exhaust-side port and flows into the exhaust path due to a resultant force of the gravity and the centrifugal force. The condensed water discharged from the exhaust-side port may evaporate before reaching the exhaust path.

In the present teaching and embodiments, an expression "the leaning vehicle stands with the help of a side stand in a state in which the vehicle body leans in the vehicle left-right direction" may indicate that, while the engine unit is in action, the leaning vehicle stands with the help of the side stand while the vehicle body leans in the vehicle left-right direction. Alternatively, the expression "the leaning vehicle stands with the help of the side stand in a state in which the vehicle body leans in the vehicle left-right direction" may indicate that, while the engine unit is stopped, the leaning vehicle stands with the help of the side stand while the vehicle body leans in the vehicle left-right direction.

In the present teaching and embodiments, the center of the EGR cooler in the vehicle body left-right direction indicates the position equidistant from the left end and the right end of the EGR cooler in the vehicle body left-right direction. The left end of the EGR cooler may be, for example, the left end of a part of the EGR cooler, which actually cools exhaust gas. The part of the EGR cooler, which actually cools exhaust gas, may be, for example, a part of the EGR cooler which includes a coolant passage. The same applies to the right end of the EGR cooler.

In the present teaching and embodiments, the center of the vehicle body in the vehicle body left-right direction indicates the position equidistant from the left end and the right end of the vehicle body in the vehicle body left-right direction.

In the present teaching and embodiments, when the center of the EGR cooler in the vehicle body left-right direction is leftward of or rightward of the center of the vehicle body, in the vehicle body left-right direction, the center of the EGR cooler may be between the left end and the right end of the vehicle body, leftward of the left end of the vehicle body, or rightward of the right end of the vehicle body.

In the present teaching and embodiments, a tank is, for example, a fuel tank that stores fuel supplied to the engine unit.

In the present teaching and embodiments, a dummy tank is, for example, a member which appears to be a tank but does not store fuel. The dummy tank may have a storage space therein. The dummy tank may be a cover that does not have a storage space.

In the present teaching and embodiments, a seat is a part on which the rider is seated.

In the present teaching and embodiments, for example, members such as a helmet are stored in a storage box. The storage box may be provided directly below the seat in the vehicle body up-down direction. In this case, the storage box may be a box whose upper end in the vehicle body up-down direction is open, and the seat may function as a lid that closes the opening of the storage box.

In the present teaching and embodiments, in the vehicle body left-right direction, the center of at least one of the tank, the dummy tank, the seat, or the storage box may be positioned at the center of the vehicle body.

In the present teaching and embodiments, the leaning vehicle may have two frame portions which are provided at a left portion and a right portion of the vehicle body in the vehicle body left-right direction and extend along the vehicle front-rear direction, or may have a frame portion which is provided at the center of the vehicle body in the vehicle body left-right direction and extends along the vehicle front-rear direction. The left portion of the vehicle body in the vehicle body left-right direction is a portion leftward of the center of the vehicle body in the vehicle body left-right direction. The right portion of the vehicle body in the vehicle body left-right direction is a portion rightward of the center of the vehicle body in the vehicle body left-right direction. The frame portion is part of the vehicle body frame. The frame portion may be part of an independent member.

In the present teaching and embodiments, when the leaning vehicle has two frame portions which are provided at a left portion and a right portion of the vehicle body in the vehicle body left-right direction and extend along the vehicle front-rear direction, an expression "the EGR cooler is provided below a space between the two frame portions" indicates that the EGR cooler is provided between the two frame portions when viewed in the vehicle body up-down direction, and is below an overlapped part of the two frame portions when viewed in the vehicle body left-right direction. The overlapped part of the two frame portions when viewed in the vehicle body left-right direction may be identical with the entirety of the two frame portions, or may be identical with a part of at least one of the two frame portions.

In the present teaching and embodiments, the frame portion extending along the vehicle front-rear direction is not limited to a frame portion extending parallel to the vehicle front-rear direction.

In the present teaching and embodiments, the cover portion constitutes part of the appearance of the vehicle. The cover portion may be an independent member, may be part of an independent member, or may be constituted by plural independent members. The cover portion may be a tank shroud that is provided to appear to be integrated with the tank. The cover portion may be at least part of a cover that is either a front cowling or a side cowling. The cover portion may be a protector provided to protect at least the EGR cooler. The cover portion may be a protector provided to protect at least the EGR path.

In the present teaching and embodiments, when the leaning vehicle has two cover portions which are provided at a left portion and a right portion of the vehicle body in the vehicle body left-right direction and extend along the front-rear direction, an expression "the EGR cooler is provided below a space between the two cover portions" indicates that the EGR cooler is provided between the two cover portions when viewed in the vehicle body up-down direction, and is below an overlapped part of the two cover portions when viewed in the vehicle body left-right direction. The overlapped part of the two cover portions when viewed in the vehicle body left-right direction may be identical with the entirety of the two cover portions, or may be identical with a part of one of the two cover portions.

In the present teaching and embodiments, the cover portion extending along the vehicle front-rear direction is not limited to a cover portion parallel to the vehicle front-rear direction.

In the present teaching and embodiments, the engine may be an air-cooled engine or a liquid-cooled engine using coolant that is not lubricating oil. The air-cooled or liquid-cooled engine may be combined with cooling by using lubricating oil.

In the present teaching and embodiments, the engine may be provided with a fuel supplier configured to supply fuel to a combustion chamber of the engine. The fuel supplier may be provided to directly supply fuel to a combustion chamber. The fuel supplier may be provided to supply fuel to an intake path.

In the present teaching and embodiments, the leaning vehicle may or may not include a forced induction device which is configured to pressurize air supplied to a combustion chamber of the engine. The forced induction device may be a turbocharger, a mechanical supercharger, or a motor-driven supercharger. The turbocharger may be an electrically assisted turbocharger configured to pressurize air by the pressure of exhaust gas and an electric motor, or a turbocharger configured to pressurize air solely by the pressure of exhaust gas. In the exhaust path, a turbine wheel of the turbocharger may be, for example, provided downstream of a part where the EGR path is connected, in the flow direction of the exhaust gas. In the exhaust path, the turbine wheel of the turbocharger may be provided upstream of the part where the EGR path is connected, in the flow direction of the exhaust gas.

In the present teaching and embodiments, the leaning vehicle may include a catalyst which is configured to purify exhaust gas and is provided in the exhaust path. The catalyst may be, for example, provided downstream of a part to which the EGR path is connected in the flow direction of the exhaust gas, in the exhaust path.

In this description, an expression "a member A is provided leftward of a member B when viewed in the left-right direction" indicates the following state. The entire member A is leftward of a plane passing through the leftmost end of the member B and orthogonal to the left-right direction. The rightmost end of the member A may or may not be on the plane passing through the leftmost end of the member B and orthogonal to the left-right direction. In this connection, the members A and B may or may not be lined up along a straight line parallel to the left-right direction. The above-described definition is suitably applied for an expression "a member A is rightward of a member B in the left-right direction", with appropriate replacement of the terms. Further, the above-described definition is suitably applied for an expression "a member A is above or below a member B in the up-down direction", with appropriate replacement of the terms. Further, the above-described definition is suitably applied for an expression "a member A is forward of or rearward of a member B in the front-rear direction", with appropriate replacement of the terms.

In the description, unless otherwise specified, an expression "a member A is to the left of a member B in the left-right direction" encompasses both a case where the member A is to the left of only a part of the member B in the left-right direction and a case where the member A is to the left of the entire member B in the left-right direction. An expression "a member A is to the left of a member B in the left-right direction" indicates the following state. The entire member A overlaps at least part of the member B when viewed in the left-right direction, and the right end of the entire member A and the left end of the at least part of the member B oppose each other in the left-right direction, The above-described definition is suitably applied for an expression "a member A is to the right of a member B in the left-right direction", with appropriate replacement of the terms. Further, the above-described definition is suitably applied for an expression "a member A is directly above or below a member B in the up-down direction", with appropriate replacement of the terms. Further, the above-described definition is suitably applied for an expression "a member A is in front of or behind a member B in the front-rear direction", with appropriate replacement of the terms.

In the present teaching and embodiments, at least one of plural options encompasses all conceivable combinations of the options. At least one of plural options may be one of the options, some of the options, or all of the options. For example, at least one of A, B, or C indicates only A, only B, only C, A and B, A and C, B and C, or A, B, and C.

In the present teaching and the embodiments, terms "including", "comprising", "having", and derivatives thereof are used to encompass not only listed items and equivalents thereof but also additional items.

Unless otherwise defined, all terms (technical and scientific terms) used in this description and claims indicate meanings typically understood by a person with ordinary skill in the art in the technical field to which the present teaching belongs. Terms such as those defined in commonly used dictionaries are to be interpreted as having meaning that is consistent with their meaning in the context of the relevant art and the present disclosure, and are not to be interpreted in an idealized or excessively formal sense.

In this description, the term "may" is non-exclusive. "May be" means "may be but not limited to". In the present specification, "may" implicitly encompasses "do not". In this specification, an arrangement which is explained by using the term "may" exerts at least the above-described effects of the arrangement of claim 1.

Before the embodiments of the present teaching are detailed, it is informed that the present teaching is not limited to the configurations and layout of elements described below and/or shown in drawings. The present teaching is also applicable to embodiments other than the embodiments described later. The present teaching may be implemented as various modifications of the below-described embodiment.

### [Advantageous Effects]

The present teaching makes it possible to provide a leaning vehicle which is capable of allowing condensed water generated in an EGR cooler to flow toward an exhaust path by means of an arrangement that is different from Patent Literature 1 and takes into account of an influence on the EGR cooler of features peculiar to the leaning vehicle, such as (A) a vehicle body leans during turning, (B) a vehicle width is short, (C) at least one of a tank, a dummy tank, a seat, or a storage box is positioned at the center in a vehicle body left-right direction, (D) the leaning vehicle stands in a state of leaning in a vehicle left-right direction, (E) the leaning vehicle includes two frame portions which extend along a front-rear direction and the interval between these portions is short in the vehicle body left-right direction, and (F) the leaning vehicle includes two cover portions which extend along the front-rear direction and the interval between these portions is short in the vehicle body left-right direction.

### [Brief Description of Drawings]

FIG. 1 is a drawing for describing the configuration of a leaning vehicle of a First Embodiment.
FIG. 2(a) is a drawing for describing the configuration of a leaning vehicle of each of Second to Fifth Embodiments,
FIG. 2(b) is a drawing for describing the disposition of an EGR cooler in the leaning vehicle of a Second Embodiment,
FIG. 2(c) is a drawing for describing the disposition of an EGR cooler in the leaning vehicle of a Third Embodiment,
FIG. 2(d) is a drawing for describing the disposition of an EGR cooler in the leaning vehicle of a Fourth Embodiment, and FIG. 2(e) is a drawing for describing the disposition of an EGR cooler in the leaning vehicle of a Fifth Embodiment.
FIG. 3(a) is a drawing for describing the configuration of a leaning vehicle of a Sixth Embodiment, FIG. 3(b) is a drawing for describing the configuration of a leaning vehicle of a Seventh Embodiment, FIG. 3(c) is a drawing for describing the configuration of a leaning vehicle of an Eighth Embodiment, and FIG. 3(d) is a drawing for describing the configuration of a leaning vehicle of a Ninth Embodiment.
FIG. 4(a) is a drawing for describing the configuration of a leaning vehicle of a Tenth Embodiment, FIG. 4(b) is a drawing for describing the configuration of a leaning vehicle of an Eleventh Embodiment, FIG. 4(c) is a drawing for describing the configuration of a leaning vehicle of a Twelfth Embodiment, and FIG. 4(d) is a drawing for describing the configuration of a leaning vehicle of a Thirteenth Embodiment.

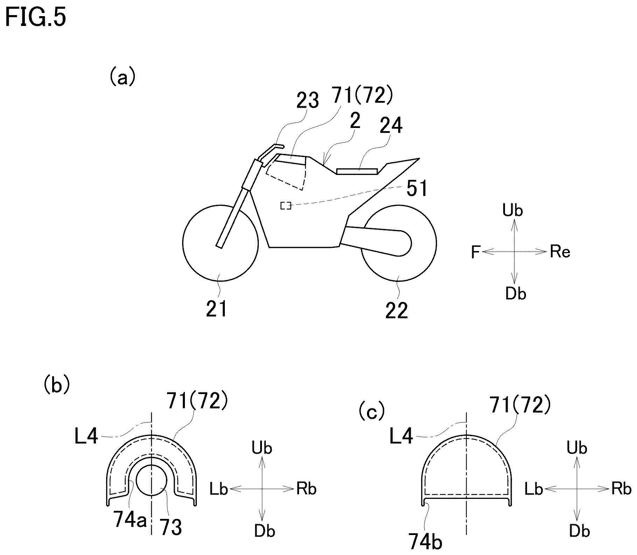

FIG. 5(a) is a drawing for describing the configuration of a leaning vehicle of a Fourteenth Embodiment, FIG. 5(b) is a drawing for describing a tank or a dummy tank in a case where the leaning vehicle of the Fourteenth Embodiment has a frame portion that is provided at the center in a vehicle body left-right direction and extends along a vehicle front-rear direction, and FIG. 5(c) is a drawing for describing a tank or a dummy tank in a case where the leaning vehicle of the Fourteenth Embodiment does not have a frame portion that is provided at the center in a vehicle body left-right direction and extends along the vehicle front-rear direction.
FIG. 6(a) is a drawing for describing the configuration of a leaning vehicle of a Fifteenth Embodiment, and FIG. 6(b) is a drawing for describing the positional relation between a seat, a storage box, and an EGR cooler when FIG. 6(a) is viewed in a vehicle body up-down direction.
FIG. 7(a) is a left side view of a leaning vehicle of a Sixteenth Embodiment, and FIG. 7(b) is a drawing for describing the positional relation between two frame portions and an EGR cooler when the leaning vehicle of the Sixteenth Embodiment is viewed in the vehicle body up-down direction.
FIG. 8(a) is a left side view of a leaning vehicle of a Seventeenth Embodiment, and FIG. 8(b) is a rear view of the leaning vehicle of the Seventeenth Embodiment.

### [Description of Embodiments]

In each figure, arrows F, Re, L, R, U, and D indicate a vehicle forward direction, a vehicle rearward direction, a vehicle leftward direction, a vehicle rightward direction, a vehicle upward direction, and a vehicle downward direction, respectively. In each figure, arrows Lb, Rb, Ub, and Ud indicate a vehicle body leftward direction, a vehicle body rightward direction, a vehicle body upward direction, and a vehicle body downward direction, respectively.

### [First Embodiment]

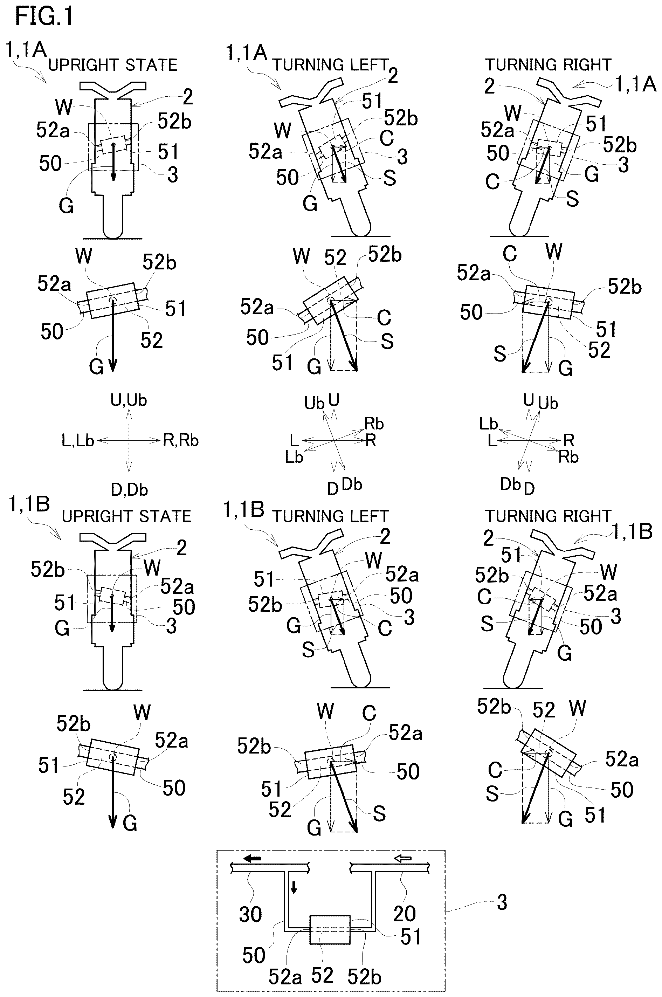

The following will describe a leaning vehicle 1 of the First Embodiment of the present teaching with reference to FIG. 1.

The leaning vehicle 1 of the First Embodiment includes a vehicle body 2 and an engine unit 3.

The vehicle body 2 leans in a vehicle leftward direction when the leaning vehicle 1 turns left, and leans in a vehicle rightward direction when the leaning vehicle 1 turns right.

The engine unit 3 is mounted on the vehicle body 2. The engine unit 3 includes an intake path 20, an exhaust path 30, an EGR path 50, and an EGR cooler 51.

The intake path 20 is a path in which air supplied to the engine unit 3 flows. The exhaust path 30 is a path in which exhaust gas generated in the engine unit 3 flows. The EGR path 50 connects the intake path 20 with the exhaust path 30. Part of the exhaust gas flowing in the exhaust path 30 is recirculated to the intake path 20 through the EGR path 50.

The EGR cooler 51 is provided at an intermediate part of the EGR path 50. The EGR cooler 51 has an in-cooler path 52 that is part of the EGR path 50. For example, the EGR cooler 51 has an unillustrated coolant path provided around the in-cooler path 52, and exhaust gas in the in-cooler path 52 is cooled by a coolant flowing in the coolant path. The in-cooler path 52 has an exhaust-side port 52a which is provided at one end in the longitudinal direction and into which exhaust gas flows from the exhaust path 30. The in-cooler path 52 has an intake-side port 52b which is provided at the other end in the longitudinal direction and from which the exhaust gas flows toward the intake path 20.

As in leaning vehicles 1A and 1B shown in FIG. 1, the EGR cooler 51 of the leaning vehicle 1 of the First Embodiment is arranged such that, when the leaning vehicle 1 is in an upright state, the lower end of the exhaust-side port 52a is positioned below the intake-side port 52b in the vehicle up-down direction. With this arrangement, when the leaning vehicle 1 is in the upright state, condensed water W generated due to cooling of the exhaust gas by the EGR cooler 51 is discharged from the exhaust-side port 52a and flows toward the exhaust path 30, on account of the gravity G. The EGR cooler 51 is arranged so that the positional relation between the exhaust-side port 52a and the intake-side port 52b in the vehicle body up-down direction is maintained even if the vehicle body 2 leans in the vehicle left-right direction, because, for example, the EGR cooler 51 is fixed to the vehicle body 2.

In addition to the above, in the EGR cooler 51 of the leaning vehicle 1 of the First Embodiment, the exhaust-side port 52a and the intake-side port 52b of the EGR cooler 51 are distanced from each other in the vehicle body left-right direction and the lower end of the exhaust-side port 52a is provided below the intake-side port 52b in the vehicle body up-down direction so that, when the leaning vehicle 1 turns as the vehicle body 2 leans in the vehicle left-right direction, the condensed water W in the EGR cooler 51 is discharged from the exhaust-side port 52a and flows toward the exhaust path 30 due to a resultant force S of the gravity G and the centrifugal force C.

To be more specific, as in the leaning vehicle 1A shown in FIG. **1****,** no matter whether the leaning vehicle 1 leans in the vehicle leftward direction or in the vehicle rightward direction, the exhaust-side port 52a is leftward of the intake-side port 52b in the vehicle body left-right direction in the EGR cooler 51 and the lower end of the exhaust-side port 52a is positioned below the intake-side port 52b in the vehicle body up-down direction.

Alternatively, as in the leaning vehicle 1B shown in FIG. 1, no matter whether the leaning vehicle 1 leans in the vehicle leftward direction or in the vehicle rightward direction, the exhaust-side port 52a is rightward of the intake-side port 52b in the vehicle body left-right direction in the EGR cooler 51 and the lower end of the exhaust-side port 52a is positioned below the intake-side port 52b in the vehicle body up-down direction.

When the leaning vehicle 1 leans in the vehicle left-right direction and performs constant turning, no matter whether the leaning vehicle 1 leans in the vehicle leftward direction or in the vehicle rightward direction and irrespective of the inclination angle of the leaning vehicle 1 in the vehicle left-right direction, the resultant force S of the gravity G and the centrifugal force C acting on the condensed water W is oriented downward in the vehicle body up-down direction. On this account, no matter whether the leaning vehicle 1 leans in the vehicle leftward direction or in the vehicle rightward direction, the condensed water W is discharged from the exhaust-side port 52a and flows toward the exhaust path 30. Furthermore, irrespective of the magnitude of the inclination angle of the leaning vehicle 1 in the vehicle left-right direction, the condensed water W is discharged from the exhaust-side port 52a and flows toward the exhaust path 30.

According to the First Embodiment, the exhaust-side port 52a and the intake-side port 52b of the EGR cooler 51 are distanced from each other in the vehicle body left-right direction, and the lower end of the exhaust-side port 52a is provided below the intake-side port 52b in the vehicle body up-down direction. With this arrangement, when the leaning vehicle 1 turns as the vehicle body 2 leans in the vehicle left-right direction, the resultant force S of the gravity G and the centrifugal force C acts on the condensed water W in the EGR cooler 51. The orientation of this resultant force S is downward in the vehicle body up-down direction, irrespective of the inclination angle of the vehicle body 2. It is therefore possible to allow the condensed water W generated in the EGR cooler 51 to flow toward the exhaust path 30, by utilizing the resultant force S.

According to the First Embodiment, furthermore, being different from Patent Literature 1, the exhaust-side port 52a and the intake-side port 52b of the EGR cooler 51 are distanced from each other in the vehicle body left-right direction. Due to this, the exhaust-side port 52a and the intake-side port 52b of the EGR cooler 51 are positionally less restricted.

### [Second to Fifth Embodiments]

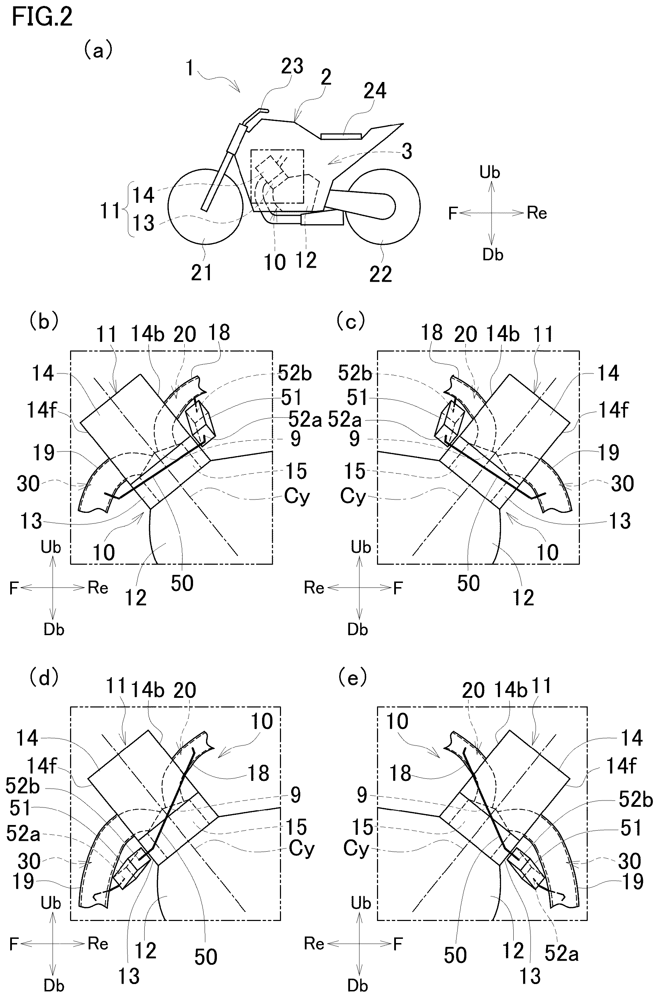

The following will describe leaning vehicles 1 of the Second to Fifth embodiments of the present teaching with reference to FIGs. 2(a) to 2(e). Each of the leaning vehicles 1 of the Second to Fifth Embodiments includes all features of the leaning vehicle 1 of the Fifth Embodiment.

As shown in FIGs. 2(a) to 2(e), a vehicle body 2 of the leaning vehicle 1 of each of the Second to Fifth Embodiments includes a front wheel 21, a rear wheel 22, a handle 23 operated by the rider, and a seat 24 on which the rider is seated. An engine unit 3 of the leaning vehicle 1 of each of the Second to Fifth Embodiments includes an engine 10. The engine 10 includes a cylinder member 11 and a crankcase member 12. The cylinder member 11 forms at least one combustion chamber 9. The cylinder member 11 includes a cylinder body member 13 and a cylinder head member 14. The cylinder body member 13 forms at least one cylinder hole 15. The cylinder head member 14 is connected to the cylinder body member 13, and constitutes an end portion of the engine 10 in a direction parallel to at least one cylinder axial line Cy that is the central axial line of at least one cylinder hole 15. The cylinder axial line Cy is tilted relative to the vehicle body up-down direction such that an upper part of the cylinder axial line Cy in the vehicle body up-down direction is positioned forward of a lower part of the cylinder axial line Cy in the vehicle front-rear direction. The cylinder head portion 14 constitutes part of the intake path 20 and part of the exhaust path 30. To a rear surface 14b of the cylinder head portion 14, an intake pipe 18 constituting part of the intake path 20 is connected. To a front surface 14f of the cylinder head portion 14, an exhaust pipe 19 constituting part of the exhaust path 30 is connected. The crankcase member 12 is connected to the lower end of the cylinder member 11 (cylinder body member 13) in the vehicle body up-down direction. The crankcase member 12 accommodates members such as an unillustrated crankshaft.

As shown in FIG. 2(b), the EGR cooler 51 of the leaning vehicle 1 of the Second Embodiment is provided behind the cylinder member 11 in the vehicle front-rear direction. In the EGR cooler 51 of the leaning vehicle 1 of the Second Embodiment, furthermore, the exhaust-side port 52a is provided leftward of the intake-side port 52b in the vehicle body left-right direction, in the same manner as in the leaning vehicle 1A shown in FIG. 1. A part of the EGR path 50 of the leaning vehicle 1 of the Second Embodiment, which is between a part connected to the exhaust path 30 and the exhaust-side port 52a, passes through a space to the left of the cylinder member 11 in the vehicle body left-right direction.

As shown in FIG. 2(c), the EGR cooler 51 of the leaning vehicle 1 of the Third Embodiment is provided behind the cylinder member 11 in the vehicle front-rear direction. In the EGR cooler 51 of the leaning vehicle 1 of the Third Embodiment, furthermore, the exhaust-side port 52a is provided rightward of the intake-side port 52b in the vehicle body left-right direction, in the same manner as in the leaning vehicle 1B shown in FIG. 1. A part of the EGR path 50 of the leaning vehicle 1 of the Third Embodiment, which is between a part connected to the exhaust path 30 and the exhaust-side port 52a, passes through a space to the right of the cylinder member 11 in the vehicle body left-right direction.

As shown in FIG. 2(d), the EGR cooler 51 of the leaning vehicle 1 of the Fourth Embodiment is provided in front of at least one of the cylinder member 11 or the crankcase member 12 in the vehicle front-rear direction. In the EGR cooler 51 of the leaning vehicle 1 of the Fourth embodiment, furthermore, the exhaust-side port 52a is provided rightward of the intake-side port 52b in the vehicle body left-right direction, in the same manner as in the leaning vehicle 1B shown in FIG. 1. A part of the EGR path 50 of the leaning vehicle 1 of the Fourth Embodiment, which is between the intake-side port 52b and a part connected to the intake path 20, passes through a space to the left of the cylinder member 11 in the vehicle body left-right direction.

As shown in FIG. 2(e), the EGR cooler 51 of the leaning vehicle 1 of the Fifth Embodiment is provided in front of at least one of the cylinder member 11 or the crankcase member 12 in the vehicle front-rear direction. In the EGR cooler 51 of the leaning vehicle 1 of the Fifth Embodiment, furthermore, the exhaust-side port 52a is provided leftward of the intake-side port 52b in the vehicle body left-right direction, in the same manner as in the leaning vehicle 1A shown in FIG. 1. A part of the EGR path 50 of the leaning vehicle 1 of the Fifth Embodiment, which is between the intake-side port 52b and a part connected to the intake path 20, passes through a space to the right of the cylinder member 11 in the vehicle body left-right direction.

FIGs. 2(b) to 2(e) show cases where one end of the EGR path 50 is connected to a part of the exhaust path 30, which is formed by the exhaust pipe 19, and the other end of the EGR path 50 is connected to a part of the intake path 20, which is formed by the intake pipe 18.

### [Sixth to Ninth Embodiments]

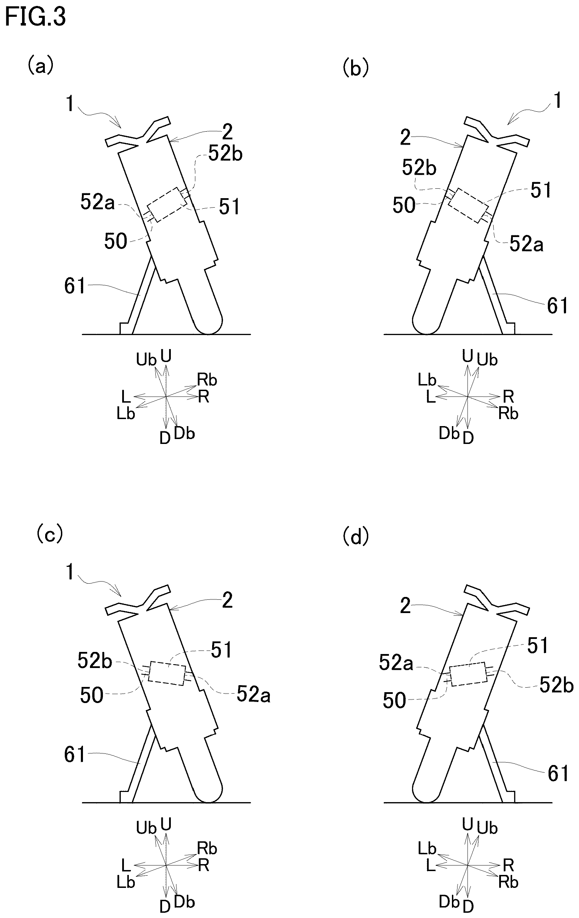

The following will describe leaning vehicles 1 of the Sixth to Ninth embodiments of the present teaching with reference to FIGs. 3(a) to 3(d). Each of the leaning vehicles 1 of the Sixth to Ninth Embodiments includes all features of the leaning vehicle 1 of the First Embodiment. Each of the leaning vehicles 1 of the Sixth to Ninth Embodiments may have the same features as the leaning vehicle 1 of one of the Second to Fifth Embodiments.

As shown in FIG. 3(a) to FIG. 3(d), the leaning vehicle 1 of each of the Sixth to Ninth Embodiments includes a side stand 61. The leaning vehicle 1 of each of the Sixth to Ninth Embodiments is able to stand with the help of a side stand 61 in a posture in which a vehicle body 2 leans in the vehicle left-right direction.

As shown in FIG. 3(a), in an EGR cooler 51 of the leaning vehicle 1 of the Sixth Embodiment, an exhaust-side port 52a is provided leftward of an intake-side port 52b in the vehicle body left-right direction.

The side stand 61 of the leaning vehicle 1 of the Sixth embodiment is provided to the left of the vehicle body 2 in the vehicle body left-right direction.

When the leaning vehicle 1 of the Sixth Embodiment stands with the help of the side stand 61 in a posture in which the vehicle body 2 leans in the vehicle leftward direction, the lower end of the exhaust-side port 52a is positioned below the intake-side port 52b in the vehicle up-down direction. It is therefore possible to allow condensed water in the EGR cooler 51 to flow toward the exhaust path 30 by utilizing gravity.

In the leaning vehicle 1 of the Sixth Embodiment, as described above, while the exhaust-side port 52a is positioned leftward of the intake-side port 52b in the vehicle body left-right direction, the side stand 61 is provided to the left of the vehicle body 2 in the vehicle body left-right direction. With this arrangement, when the leaning vehicle 1 stands with the help of the side stand 61, the state in which the lower end of the exhaust-side port 52a of the EGR cooler 51 is positioned below the intake-side port 52b is achieved by utilizing the leaning of the vehicle body 2 established by the side stand 61.

As shown in FIG. 3(b), in an EGR cooler 51 of the leaning vehicle 1 of the Seventh Embodiment, an exhaust-side port 52a is provided rightward of an intake-side port 52b in the vehicle body left-right direction.

The side stand 61 of the leaning vehicle 1 of the Seventh Embodiment is provided to the right of the vehicle body 2 in the vehicle body left-right direction.

When the leaning vehicle 1 of the Seventh Embodiment stands with the help of the side stand 61 in a posture in which the vehicle body 2 leans in the vehicle rightward direction, the lower end of the exhaust-side port 52a is positioned below the intake-side port 52b in the vehicle up-down direction. It is therefore possible to allow condensed water in the EGR cooler 51 to flow toward the exhaust path 30 by utilizing gravity.

In the leaning vehicle 1 of the Seventh Embodiment, as described above, while the exhaust-side port 52a is positioned rightward of the intake-side port 52b in the vehicle body left-right direction, the side stand 61 is provided to the right of the vehicle body 2 in the vehicle body left-right direction. With this arrangement, when the leaning vehicle 1 stands with the help of the side stand 61, the state in which the lower end of the exhaust-side port 52a of the EGR cooler 51 is positioned below the intake-side port 52b is achieved by utilizing the leaning of the vehicle body 2 established by the side stand 61.

As shown in FIG. 3(c), in an EGR cooler 51 of the leaning vehicle 1 of the Eighth Embodiment, an exhaust-side port 52a is provided rightward of an intake-side port 52b in the vehicle body left-right direction.

The side stand 61 of the leaning vehicle 1 of the Eighth Embodiment is provided to the left of the vehicle body 2 in the vehicle body left-right direction.

When the leaning vehicle 1 of the Eighth Embodiment stands with the help of the side stand 61 in a posture in which the vehicle body 2 leans in the vehicle leftward direction, the lower end of the exhaust-side port 52a is positioned below the intake-side port 52b in the vehicle up-down direction. It is therefore possible to allow condensed water in the EGR cooler 51 to flow toward the exhaust path 30 by utilizing gravity.

As shown in FIG. 3(d), in an EGR cooler 51 of the leaning vehicle 1 of the Ninth Embodiment, an exhaust-side port 52a is provided leftward of an intake-side port 52b in the vehicle body left-right direction.

The side stand 61 of the leaning vehicle 1 of the Ninth Embodiment is provided to the right of the vehicle body 2 in the vehicle body left-right direction.

When the leaning vehicle 1 of the Ninth Embodiment stands with the help of the side stand 61 in a posture in which the vehicle body 2 leans in the vehicle rightward direction, the lower end of the exhaust-side port 52a is positioned below the intake-side port 52b in the vehicle up-down direction. It is therefore possible to allow condensed water in the EGR cooler 51 to flow toward the exhaust path 30 by utilizing gravity.

### [Tenth to Thirteenth Embodiments]

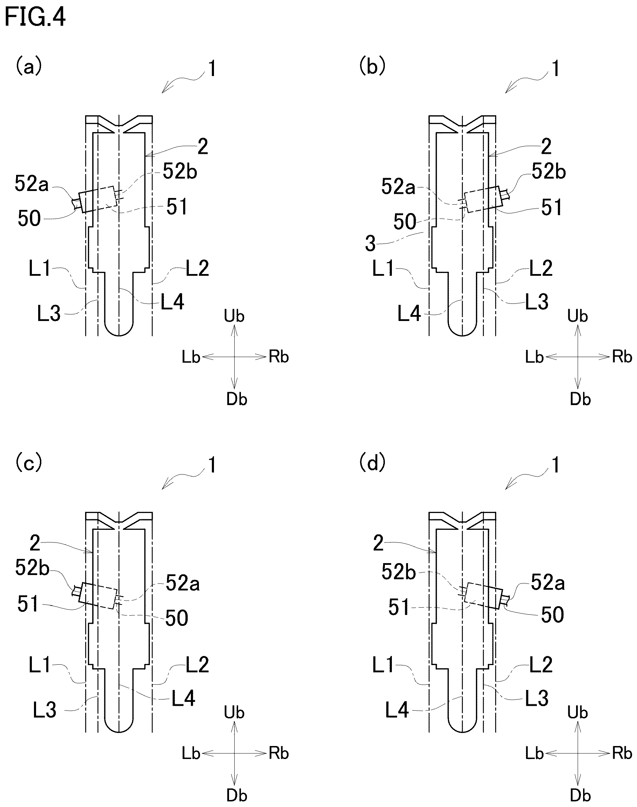

The following will describe leaning vehicles 1 of the Tenth to Thirteenth Embodiments of the present teaching with reference to FIGs. 4(a) to 4(d). Each of the leaning vehicles 1 of the Tenth to Thirteenth Embodiments includes all features of the leaning vehicle 1 of the First Embodiment. Each of the leaning vehicles 1 of the Tenth to Thirteenth Embodiments may have the same features as the leaning vehicle 1 of one of the Second to Fifth Embodiments. Each of the leaning vehicles 1 of the Tenth to Thirteenth Embodiments may have the same features as the leaning vehicle 1 of one of the Sixth to Ninth Embodiments.

As shown in FIG. 4(a), in an EGR cooler 51 of the leaning vehicle 1 of the Tenth Embodiment, an exhaust-side port 52a is provided leftward of an intake-side port 52b in the vehicle body left-right direction. The EGR cooler 51 of the leaning vehicle 1 of the Tenth Embodiment is positioned such that, in the vehicle body left-right direction, at least part of the EGR cooler 51 is positioned between the left end (linear line L1) and the right end (linear line L2) of the vehicle body 2 and the center (linear line L3) of the EGR cooler 51 is positioned leftward of the center (linear line L4) of the vehicle body 2.

As shown in FIG. 4(b), in an EGR cooler 51 of the leaning vehicle 1 of the Eleventh Embodiment, an exhaust-side port 52a is provided leftward of an intake-side port 52b in the vehicle body left-right direction. The EGR cooler 51 of the leaning vehicle 1 of the Eleventh Embodiment is positioned such that, in the vehicle body left-right direction, at least part of the EGR cooler 51 is positioned between the left end (linear line L1) and the right end (linear line L2) of the vehicle body 2 and the center (linear line L3) of the EGR cooler 51 is positioned rightward of the center (linear line L4) of the vehicle body 2.

As shown in FIG. 4(c), in an EGR cooler 51 of the leaning vehicle 1 of the Twelfth Embodiment, an exhaust-side port 52a is provided rightward of an intake-side port 52b in the vehicle body left-right direction. The EGR cooler 51 of the leaning vehicle 1 of the Twelfth Embodiment is positioned such that, in the vehicle body left-right direction, at least part of the EGR cooler 51 is positioned between the left end (linear line L1) and the right end (linear line L2) of the vehicle body 2 and the center (linear line L3) of the EGR cooler 51 is positioned leftward of the center (linear line L4) of the vehicle body 2.

As shown in FIG. 4(d), in an EGR cooler 51 of the leaning vehicle 1 of the Thirteenth Embodiment, an exhaust-side port 52a is provided rightward of an intake-side port 52b in the vehicle body left-right direction. The EGR cooler 51 of the leaning vehicle 1 of the Thirteenth Embodiment is positioned such that, in the vehicle body left-right direction, at least part of the EGR cooler 51 is positioned between the left end (linear line L1) and the right end (linear line L2) of the vehicle body 2 and the center (linear line L3) of the EGR cooler 51 is positioned rightward of the center (linear line L4) of the vehicle body 2.

In FIG. 4(a) to FIG. 4(d), the entire EGR cooler 51 is positioned leftward of or rightward of the center of the vehicle body 2 in the vehicle body left-right direction. Alternatively, in the vehicle body left-right direction, the EGR cooler 51 may have a part leftward of the center of the vehicle body 2 and a part rightward of the center of the vehicle body 2.

FIG. 4(a) to FIG. 4(d) show cases where the center of the EGR cooler 51 is positioned between the left end and the right end of the vehicle body 2 in the vehicle body left-right direction. Alternatively, in the vehicle body left-right direction, the center of the EGR cooler 51 may be positioned leftward of the left end of the vehicle body 2 or rightward of the right end of the vehicle body 2.

As compared to automobiles, the vehicle width (length in the vehicle body left-right direction) of the leaning vehicle 1 is typically short. In the Tenth to Thirteenth Embodiments, at least part of the EGR cooler 51 of the leaning vehicle 1 is positioned between the left end and the right end of the vehicle body 2 and the center of the EGR cooler 51 is leftward or rightward of the center of the vehicle body 2, in the vehicle body left-right direction. This makes it easy to provide a part of the EGR cooler 51 at a position protruding from the left end or the right end of the vehicle body 2 or a position close to the left end or the right end of the vehicle body 2. As a result of this, heat moving up from the EGR cooler 51 is less likely to be trapped in a space below the tank 71, the dummy tank 72, the seat 24, or the storage box 81, a space between a frame portion 92A and a frame portion 92B, or a space between a cover portion 101A and a cover portion 101B, as described below in the Fourteenth to Eighteenth Embodiments, for example. Because the heat is less likely to be trapped in these spaces, the cooling capability of the EGR cooler 51 can be improved.

Furthermore, because the vehicle width is short and maintenance is typically performed from the left or right side of the vehicle body 2 in the leaning vehicle 1, maintainability of the EGR cooler 51 is good as compared to a case where the center of the EGR cooler 51 is provided at the center of the vehicle body 2 in the vehicle body left-right direction.

In addition to the above, when the center of the EGR cooler 51 is positioned between the left end and the right end of the vehicle body 2 in the vehicle body left-right direction, the protrusion amount of the EGR cooler 51 in the vehicle body left-right direction is suppressed as compared to a case where, in the vehicle body left-right direction, at least part of the EGR cooler is positioned between the left end and the right end of the vehicle body 2 and the center of the EGR cooler is positioned leftward of the left end of the vehicle body 2 or rightward of the right end of the vehicle body 2.

### [Fourteenth Embodiment]

The following will describe a leaning vehicle 1 of the Fourteenth Embodiment of the present teaching with reference to FIG. 5(a) to FIG. 5(c). The leaning vehicle 1 of the Fourteenth Embodiment includes all features of the leaning vehicle 1 of the First Embodiment. Furthermore, the leaning vehicle 1 of the Fourteenth Embodiment includes all features of the leaning vehicle 1 of any one of the Tenth to Thirteenth Embodiments. The leaning vehicle 1 of the Fourteenth Embodiment may have the same features as the leaning vehicle 1 of one of the Second to Fifth Embodiments. The leaning vehicle 1 of the Fourteenth Embodiment may have the same features as the leaning vehicle 1 of any one of the Sixth to Ninth Embodiments.

As shown in FIG. 5(a), the vehicle body 2 of the leaning vehicle 1 of the Fourteenth Embodiment has a tank 71 configured to store fuel or a dummy tank 72, which appears to be a tank but does not store fuel. In the vehicle body left-right direction, the center of the tank 71 or the dummy tank 72 may be positioned at the center of the vehicle body 2.

Furthermore, at least part of an EGR cooler 51 of the leaning vehicle 1 of the Fourteenth Embodiment is positioned directly below the tank 71 or the dummy tank 72 in the vehicle body up-down direction.

As shown in FIG. 5(b), when the vehicle body 2 has a frame portion 73 which is provided at the center (linear line L4) in the vehicle body left-right direction and extends along the vehicle front-rear direction, the tank 71 or the dummy tank 72 has a recess 74a which is provided at the center in the vehicle body left-right direction of the lower surface in order to provide the frame portion 73. Furthermore, as shown in FIG. 5(c), even when the vehicle body 2 does not have a frame portion which is provided at the center in the vehicle body left-right direction and extends along the vehicle front-rear direction, the tank 71 or the dummy tank 72 has a recess 74b in the lower surface. Heat tends to be trapped in a space formed by the recesses 74a and 74b.

Typically, the vehicle width (length in the vehicle body left-right direction) of the leaning vehicle 1 is short. The EGR cooler 51 of the leaning vehicle 1 of the Fourteenth Embodiment is positioned such that, in the vehicle body left-right direction, at least part of the EGR cooler 51 is positioned between the left end and the right end of the vehicle body 2 and the center of the EGR cooler 51 is positioned leftward or rightward of the center of the vehicle body 2. This makes it easy to provide a part of the EGR cooler 51 at a position protruding from the left end or the right end of the vehicle body 2 or a position close to the left end or the right end of the vehicle body 2. With this arrangement, heat moving up from the EGR cooler 51 is less likely to be trapped in the space below the tank 71 or the dummy tank 72. Because the heat is less likely to be trapped in this space, the cooling capability of the EGR cooler 51 can be improved.

While FIG. 5(a) to FIG. 5(c) show cases where the dummy tank 72 has a storage space therein, the dummy tank 72 may be a cover without a storage space.

### [Fifteenth Embodiment]

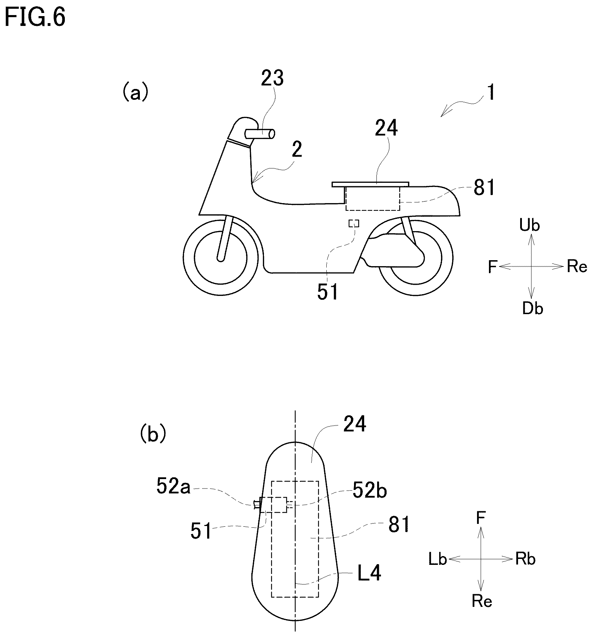

The following will describe a leaning vehicle 1 of the Fifteenth Embodiment of the present teaching with reference to FIG. 6(a) and FIG. 6(b). The leaning vehicle 1 of the Fifteenth Embodiment includes all features of the leaning vehicle 1 of the First Embodiment. Furthermore, the leaning vehicle 1 of the Fifteenth Embodiment includes all features of the leaning vehicle 1 of any one of the Tenth to Thirteenth Embodiments. The leaning vehicle 1 of the Fifteenth Embodiment may have the same features as the leaning vehicle 1 of any one of the Second to Fifth Embodiments. The leaning vehicle 1 of the Fifteenth Embodiment may have the same features as the leaning vehicle 1 of at least one of the Sixth to Ninth Embodiments. The leaning vehicle 1 of the Fifteenth Embodiment may have the same features as the leaning vehicle 1 of the Fourteenth Embodiment.

As shown in FIG. 6(a) and Fig. 6(b), a vehicle body 2 of the leaning vehicle 1 of the Fifteenth Embodiment has a storage box 81. The storage box 81 is provided directly below a seat 24 in the vehicle body up-down direction in the vehicle body 2. The storage box 81 is open at the upper end in the vehicle body up-down direction. The seat 24 functions as a lid for closing the opening at the upper end of the storage box 81. In the vehicle body left-right direction, the center of each of the seat 24 and the storage box 81 may be positioned at the center of the vehicle body 2. Furthermore, as shown in FIG. 6(a) and FIG. 6(b), at least part of an EGR cooler 51 of the leaning vehicle 1 of the Fifteenth Embodiment is positioned directly below the seat 24 at a closed position and the storage box 81 in the vehicle body up-down direction. In the same manner as in the Tenth and Twelfth Embodiments (FIG. 4(a) and FIG. 4(c)), FIG. 6(b) shows a case where at least part of the EGR cooler 51 is positioned leftward of the center (linear line L4) of the vehicle body 2 in the vehicle body left-right direction. Alternatively, in the same manner as in the Eleventh and Thirteenth Embodiments (FIG. 4(b) and FIG. 4(d)), at least part of the EGR cooler 51 may be positioned rightward of the center of the vehicle body 2 in the vehicle body left-right direction.

In the Fifteenth Embodiment, the EGR cooler 51 of the leaning vehicle 1 which is short in vehicle width (length in the vehicle body left-right direction) is positioned such that, in the vehicle body left-right direction, at least part of the EGR cooler 51 is positioned between the left end and the right end of the vehicle body 2 and the center of the EGR cooler 51 is positioned leftward or rightward of the center of the vehicle body 2. This makes it easy to provide a part of the EGR cooler 51 at a position protruding from the left end or the right end of the vehicle body 2 or a position close to the left end or the right end of the vehicle body 2. With this arrangement, heat moving up from the EGR cooler 51 is less likely to be trapped in the space below the seat 24 or the storage box 81. Because the heat is less likely to be trapped in these spaces, the cooling capability of the EGR cooler 51 can be improved.

### [Sixteenth Embodiment]

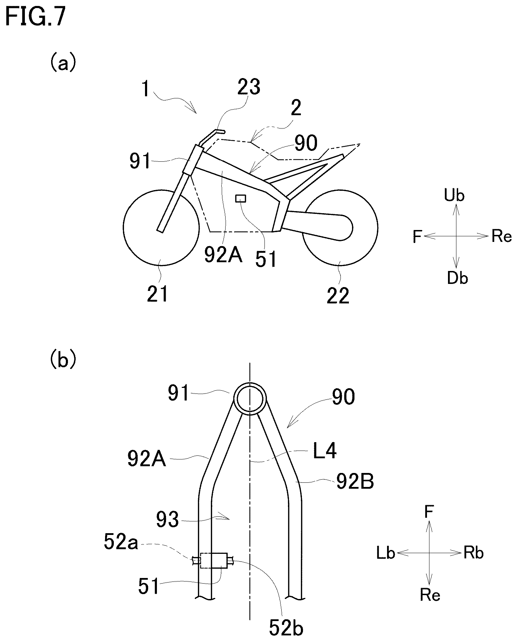

The following will describe a leaning vehicle 1 of the Sixteenth Embodiment of the present teaching with reference to FIG. 7(a) and FIG. 7(b). The leaning vehicle 1 of the Sixteenth Embodiment includes all features of the leaning vehicle 1 of the First Embodiment. Furthermore, the leaning vehicle 1 of the Sixteenth Embodiment includes all features of the leaning vehicle 1 of any one of the Tenth to Thirteenth Embodiments. The leaning vehicle 1 of the Sixteenth Embodiment may have the same features as the leaning vehicle 1 of one of the Second to Fifth Embodiments. The leaning vehicle 1 of the Sixteenth Embodiment may have the same features as the leaning vehicle 1 of one of the Sixth to Ninth Embodiments. The leaning vehicle 1 of the Sixteenth Embodiment may have the same features as the leaning vehicle 1 of at least one of the Fourteenth and Fifteenth Embodiments.

As shown in FIG. 7(a) and FIG. 7(b), a vehicle body 2 of the leaning vehicle 1 of the Sixteenth Embodiment has a vehicle body frame 90. The vehicle body frame 90 includes a head pipe 91 and two frame portions 92A and 92B. The head pipe 91 is cylindrical in shape and is provided such that the axis thereof extends along the vehicle body up-down direction. Into the head pipe 91, a steering shaft connected to a handle 23 is inserted.

The frame portions 92A and 92B are portions of the vehicle body frame 90 and extend along the vehicle front-rear direction, and a front end portion in the vehicle front-rear direction of each frame portion is connected to the head pipe 91. The frame portion 92A is at a left portion of the vehicle body 2 in the vehicle body left-right direction. The frame portion 92B is at a right portion of the vehicle body 2 in the vehicle body left-right direction. The frame portion 92A and the frame portion 92B are spaced apart from each other in the vehicle body left-right direction.

In the vehicle body up-down direction, at least part of the EGR cooler 51 of the leaning vehicle 1 of the Fifteenth Embodiment is provided below a space 93 between the frame portion 92A and the frame portion 92B in the vehicle body left-right direction.

In the Sixteenth Embodiment, the EGR cooler 51 of the leaning vehicle 1 which is short in vehicle width (length in the vehicle body left-right direction) is positioned such that, in the vehicle body left-right direction, at least part of the EGR cooler 51 is positioned between the left end and the right end of the vehicle body 2 and the center of the EGR cooler 51 is positioned leftward or rightward of the center of the vehicle body 2. This makes it easy to provide a part of the EGR cooler 51 at a position protruding from the left end or the right end of the vehicle body 2 or a position close to the left end or the right end of the vehicle body 2. With this arrangement, heat moving up from the EGR cooler 51 is less likely to be trapped in the space 93 between the frame portion 92A and the frame portion 92B. Because the heat is less likely to be trapped in this space 93, the cooling capability of the EGR cooler 51 can be improved.

### [Seventeenth Embodiment]

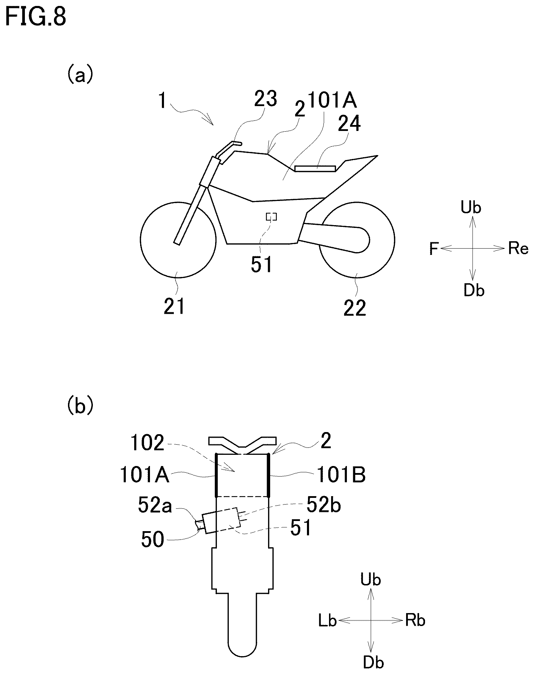

The following will describe a leaning vehicle 1 of the Seventeenth Embodiment of the present teaching with reference to FIG. 8(a) and FIG. 8(b). The leaning vehicle 1 of the Seventeenth Embodiment includes all features of the leaning vehicle 1 of the First Embodiment. Furthermore, the leaning vehicle 1 of the Seventeenth Embodiment includes all features of the leaning vehicle 1 of any one of the Tenth to Thirteenth Embodiments. The leaning vehicle 1 of the Seventeenth Embodiment may have the same features as the leaning vehicle 1 of one of the Second to Fifth Embodiments. The leaning vehicle 1 of the Seventeenth Embodiment may have the same features as the leaning vehicle 1 of one of the Sixth to Ninth Embodiments. The leaning vehicle 1 of the Seventeenth Embodiment may have the same features as the leaning vehicle 1 of at least one of the Fourteenth to Sixteenth Embodiments.

As shown in FIG. 8(a) and FIG. 8(b), a vehicle body 2 of the leaning vehicle 1 of the Seventeenth Embodiment includes two cover portions 101A and 101B. The cover portion 101A is at a left portion of the vehicle body 2 in the vehicle body left-right direction. The cover portion 101B is at a right portion of the vehicle body 2 in the vehicle body left-right direction. The cover portion 101A and the cover portion 101B are spaced apart from each other in the vehicle body left-right direction. The cover portion 101A and the cover portion 101B may be independent from each other. Alternatively, the cover portion 101A and the cover portion 101B may be two different portions of a single cover provided at the vehicle body 2 of the leaning vehicle 1.

In the vehicle body up-down direction, at least part of the EGR cooler 51 of the leaning vehicle 1 of the Seventeenth Embodiment is provided below a space 102 between the cover portion 101A and the cover portion 101B in the vehicle body left-right direction.

In the Seventeenth Embodiment, the EGR cooler 51 of the leaning vehicle 1 which is short in vehicle width (length in the vehicle body left-right direction) is positioned such that, in the vehicle body left-right direction, at least part of the EGR cooler 51 is positioned between the left end and the right end of the vehicle body 2 and the center of the EGR cooler 51 is positioned leftward or rightward of the center of the vehicle body 2. This makes it easy to provide a part of the EGR cooler 51 at a position protruding from the left end or the right end of the vehicle body 2 or a position close to the left end or the right end of the vehicle body 2. With this arrangement, heat moving up from the EGR cooler 51 is less likely to be trapped in the space 102 between the cover portion 101A and the cover portion 101B. Because the heat is less likely to be trapped in this space 102, the cooling capability of the EGR cooler 51 can be improved.

### [Reference Signs List]

1: leaning vehicle, 2: vehicle body, 3: engine unit, 20: intake path, 24: seat, 30: exhaust path, 50: EGR path, 51: EGR cooler, 52: in-cooler path, 52a: exhaust-side port, 52b: intake-side port, 61: side stand, 71: tank, 72: dummy tank, 81: storage box, 92A, 92B: frame portion, 93: space between two frame portions, 101A, 101B, cover portion, 102: space between two cover portions, C: centrifugal force, G: gravity, W: condensed water

## Claims

1. A leaning vehicle comprising:
a vehicle body which leans in a vehicle leftward direction when turning left and leans in a vehicle rightward direction when turning right; and
an EGR cooler (i) which is mounted on the vehicle body, (ii) which is provided at an intermediate part of an EGR path in which part of exhaust gas generated in an engine unit recirculates from an exhaust path to an intake path, (iii) which has an exhaust-side port through which the exhaust gas flows in from the exhaust path and an intake-side port through which the exhaust gas flows out toward the intake path, (iv) which is arranged such that, when the leaning vehicle is in an upright state, the lower end of the exhaust-side port is positioned below the intake-side port in a vehicle up-down direction, (v) which is arranged such that, even when the vehicle body leans in a vehicle left-right direction, positional relation between the exhaust-side port and the intake-side port in a vehicle body up-down direction that is set with reference to the vehicle body leaning in the vehicle left-right direction is maintained, (vi) which is configured to cool the exhaust gas, and (vii) which is provided to allow condensed water generated due to cooling of the exhaust gas to be discharged from the exhaust-side port and flow toward the exhaust path,
when the leaning vehicle turns as the vehicle body leans in the vehicle left-right direction, the condensed water in the EGR cooler being allowed to be discharged from the exhaust-side port and flow toward the exhaust path due to a resultant force of gravity and a centrifugal force,
in a vehicle body left-right direction that is set with reference to the vehicle body leaning in the vehicle left-right direction, the exhaust-side port and the intake-side port of the EGR cooler being spaced apart from each other, and
in the vehicle body up-down direction, the lower end of the exhaust-side port being positioned below the intake-side port.

2. The leaning vehicle according to claim 1, further comprising
a side stand with the help of which the leaning vehicle stands while the vehicle body leans in the vehicle left-right direction,
when the leaning vehicle stands with the help of the side stand while the vehicle body leans in the vehicle left-right direction, the condensed water in the EGR cooler being allowed to flow toward the exhaust path,
in the vehicle body up-down direction, the lower end of the exhaust-side port being positioned below the intake-side port.

3. The leaning vehicle according to claim 2, wherein,
the side stand is positioned to the left of the vehicle body in the vehicle body left-right direction and the exhaust-side port is positioned leftward of the intake-side port in the vehicle body left-right direction, or
the side stand is positioned to the right of the vehicle body in the vehicle body left-right direction and the exhaust-side port is positioned rightward of the intake-side port in the vehicle body left-right direction.

4. The leaning vehicle according to any one of claims 1 to 3, wherein, in the vehicle body left-right direction, at least part of the EGR cooler is positioned between the left end and the right end of the vehicle body and the center of the EGR cooler is positioned leftward or rightward of the center of the vehicle body.

5. The leaning vehicle according to claim 4, wherein, in the vehicle body left-right direction, the center of the EGR cooler is positioned between the left end and the right end of the vehicle body.

6. The leaning vehicle according to claim 4 or 5, further comprising
at least one of a tank, a dummy tank, a seat, or a storage box,
in the vehicle body up-down direction, at least part of the EGR cooler being positioned directly below at least one of the tank, the dummy tank, the seat, or the storage box.

7. The leaning vehicle according to any one of claims 4 to 6, further comprising
two frame portions which are provided at a left portion and a right portion of the vehicle body in the vehicle body left-right direction and extend along the vehicle front-rear direction,
in the vehicle body up-down direction, at least part of the EGR cooler being positioned directly below a space between the two frame portions.

8. The leaning vehicle according to any one of claims 4 to 7, further comprising
two cover portions which are provided at a left portion and a right portion of the vehicle body in the vehicle body left-right direction and extend along the vehicle front-rear direction,
in the vehicle body up-down direction, at least part of the EGR cooler being positioned directly below a space between the two cover portions.
